(19) **Europäisches Patentamt / European Patent Office / Office européen des brevets**

(11) **EP 4 654 627 A1**

(12) **EUROPEAN PATENT APPLICATION**
published in accordance with Art. 153(4) EPC

(43) Date of publication:
**26.11.2025 Bulletin 2025/48**

(21) Application number: **24744116.5**

(22) Date of filing: **09.01.2024**

(51) International Patent Classification (IPC):
***H04W 4/20*** (2018.01)

(52) Cooperative Patent Classification (CPC):
**H04L 41/16; H04W 4/20**

(86) International application number:
**PCT/CN2024/071238**

(87) International publication number:
**WO 2024/152940 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.01.2023 CN 202310087252**
**08.02.2023 CN 202310102348**

(71) Applicant: **Vivo Mobile Communication Co., Ltd.**
**Dongguan, Guangdong 523863 (CN)**

(72) Inventors:
• **CHENG, Sihan**
**Dongguan, Guangdong 523863 (CN)**
• **WU, Xiaobo**
**Dongguan, Guangdong 523863 (CN)**
• **CHONG, Weiwei**
**Dongguan, Guangdong 523863 (CN)**

(74) Representative: **dompatent**
**Deichmannhaus am Dom**
**Bahnhofsvorplatz 1**
**50667 Köln (DE)**

(54) **INFORMATION TRANSMISSION METHOD AND APPARATUS, AND DEVICE**

(57) This application discloses an information transmission method and apparatus and a device, and pertains to the field of communication technologies. The method according to an embodiment of this application includes: sending, by a first device, first information corresponding to first accuracy information of a first model to a second device or a third device, where the first information is used to describe information used to obtain the first accuracy information; and the second device is a device that triggers the first device to execute the first model, and the third device is a device that generates the first model.

Start

A first device sends first information corresponding to first accuracy information of a first model to a second device or a third device, where the first information is used to describe information used to obtain the first accuracy information; and the second device is a device that triggers the first device to execute the first model, and the third device is a device that generates the first model — 301

End

FIG. 3

# Description

## CROSS-REFERENCE TO RELATED APPLICATIONS

This application claims priority to Chinese Patent Application No. 202310087252.1 filed in China on January 16, 2023, and Chinese Patent Application No. 202310102348.0 filed in China on February 8, 2023, which are incorporated herein by reference in their entireties.

## TECHNICAL FIELD

This application pertains to the field of communication technologies, and specifically relates to an information transmission method and apparatus and a device.

## BACKGROUND

With the development of technology, some network functions are introduced in the communication network for performing intelligent data analysis and generating data analysis results (analytics) (or referred to as inference data results) for some tasks. These data analysis results can assist in-network and off-network devices in policy decision-making, aiming to enhance the intelligence level of device policy decisions through artificial intelligence (Artificial Intelligence, AI) models.

Currently, to ensure the accuracy of data analysis results, the accuracy in use (Accuracy in Use, AiU) during the actual application stage or the accuracy during the inference (inference) stage is calculated. However, in specific scenarios, the AiU obtained through these methods is prone to errors, leading to issues that correct inference results are incorrectly ceased from use or incorrect inference results continue to be applied.

## SUMMARY

Embodiments of this application provide an information transmission method and apparatus and a device, which can address the issue in existing methods where the relatively large error in determining model inference accuracy affects the usability of inference results.

According to a first aspect, an information transmission method is provided and includes:

sending, by a first device, first information corresponding to first accuracy information of a first model to a second device or a third device, where the first information is used to describe information used to obtain the first accuracy information; and
the second device is a device that triggers the first device to execute the first model, and the third device is a device that generates the first model.

According to a second aspect, an information transmission apparatus is provided and includes:

a first sending module, configured to send first information corresponding to first accuracy information of a first model to a second device or a third device, where the first information is used to describe information used to obtain the first accuracy information; and
the second device is a device that triggers a first device to execute the first model, and the third device is a device that generates the first model.

According to a third aspect, an information transmission method is provided and includes:

triggering, by a second device, a first device to execute a first model; and
receiving, by the second device, first information corresponding to first accuracy information of the first model sent by the first device, where the first information is used to describe information used to obtain the first accuracy information.

According to a fourth aspect, an information transmission apparatus is provided and includes:

a first processing module, configured to trigger a first device to execute a first model; and
a first receiving module, configured to receive first information corresponding to first accuracy information of the first model sent by the first device, where the first information is used to describe information used to obtain the first accuracy information.

According to a fifth aspect, an information transmission method is provided and includes:

sending, by a third device, a first model to a first device; and
receiving, by the third device, first information corresponding to first accuracy information of the first model sent by the first device, where the first information is used to describe information used to obtain the first accuracy information.

According to a sixth aspect, an information transmission apparatus is provided and includes:

a second sending module, configured to send a first model to a first device; and
a second receiving module, configured to receive first information corresponding to first accuracy information of the first model sent by the first device, where the first information is used to describe information used to obtain the first accuracy information.

According to a seventh aspect, a communication device is provided and includes a processor and a memory, where the memory stores a program or instructions executable on the processor, and the program or instructions, when executed by the processor, implement the steps of the method according to the first aspect, implement the steps of the method according to the third aspect, or implement the steps of the method according to the fifth aspect.

According to an eighth aspect, a communication device is provided and includes a processor and a communication interface, where the communication interface is configured to send first information corresponding to first accuracy information of a first model to a second device or a third device, and the first information is used to describe information used to obtain the first accuracy information; and

the second device is a device that triggers a first device to execute the first model, and the third device is a device that generates the first model.

According to a ninth aspect, a communication device is provided and includes a processor and a communication interface, where the processor is configured to trigger a first device to execute a first model; and

the communication interface is configured to receive first information corresponding to first accuracy information of the first model sent by the first device, and the first information is used to describe information used to obtain the first accuracy information.

According to a tenth aspect, a communication device is provided and includes a processor and a communication interface, where the communication interface is configured to send a first model to a first device; and the communication interface is further configured to receive first information corresponding to first accuracy information of the first model sent by the first device, and the first information is used to describe information used to obtain the first accuracy information.

According to an eleventh aspect, an information transmission system is provided and includes: a first device, a second device, and a third device, where the first device is able to execute the steps of the method according to the first aspect, the second device is able to execute the steps of the method according to the third aspect, and the third device is able to execute the steps of the method according to the fifth aspect.

According to a twelfth aspect, a readable storage medium is provided, and the readable storage medium stores a program or instructions, where the program or instructions, when executed by a processor, implement the steps of the method according to the first aspect, implement the steps of the method according to the third aspect, or implement the steps of the method according to the fifth aspect.

According to a thirteenth aspect, a chip is provided and the chip includes a processor and a communication interface, where the communication interface is coupled to the processor, and the processor is configured to run a program or instructions to implement the steps of the method according to the first aspect, implement the steps of the method according to the third aspect, or implement the steps of the method according to the fifth aspect.

According to a fourteenth aspect, a computer program/program product is provided, the computer program/program product is stored in a storage medium, and the computer program/program product is executed by at least one processor to implement the steps of the method according to the first aspect, implement the steps of the method according to the third aspect, or implement the steps of the method according to the fifth aspect.

In the embodiments of this application, after the first device sends the first information to the second device (the device that triggers the first device to execute the first model) or the third device (the device that generates the first model), the second device or the third device can understand the information about the data used to obtain the first accuracy information of the first model, and thus can perform subsequent processing based on the first information, which avoids the issue that a large deviation in the first accuracy information affects the usability of inference results.

## BRIEF DESCRIPTION OF DRAWINGS

FIG. 1 is a block diagram of a wireless communication system;
FIG. 2 is a schematic diagram of the process of artificial intelligence data analysis;
FIG. 3 is a first schematic diagrams of an information transmission method according to an embodiment of this application;
FIG. 4 is a first schematic diagrams of the application of the method according to an embodiment of this application;
FIG. 5 is a second schematic diagram of the application of the method according to an embodiment of this application;
FIG. 6 is a third schematic diagram of the application of the method according to an embodiment of this application;
FIG. 7 is a fourth schematic diagram of the application of the method according to an embodiment of this application;
FIG. 8 is a second schematic diagram of an information transmission method according to an embodiment of this application;
FIG. 9 is a third schematic diagram of an information transmission method according to an embodiment of this application;
FIG. 10 is a schematic diagram of a module structure of an apparatus corresponding to FIG. 3;
FIG. 11 is a schematic diagram of a module structure of an apparatus corresponding to FIG. 8;
FIG. 12 is a schematic diagram of a module structure of an apparatus corresponding to FIG. 9;
FIG. 13 is a schematic structural diagram of a communication device according to an embodiment of this application;
FIG. 14 is a schematic structural diagram of a terminal according to an embodiment of this application; and
FIG. 15 is a schematic structural diagram of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "or" in the specification and claims indicates at least one of the connected objects, for example, "A or B" covers three scenarios: scenario one: including A but not B; scenario two: including B but not A; and scenario three: including both A and B. The term "indication" in the specification and claims of this application can be either an explicit indication or an implicit indication. An explicit indication can be understood as the sender clearly informing the receiver of the operation to be performed or the result of the request in the sent indication; and an implicit indication can be understood as the receiver making a judgment based on the indication sent by the sender and determining the operation to be performed or the result of the request based on the judgment result.

It should be noted that technologies described in the embodiments of this application are not limited to a long term evolution (Long Term Evolution, LTE)/LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

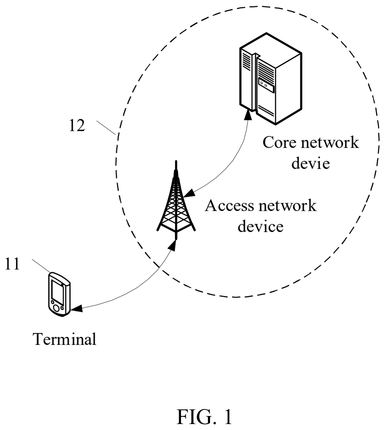

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), smart-home appliance (a smart-home device having a wireless communication function, for example, a refrigerator, a television, a washing machine, or furniture), a game console, a personal computer (personal computer, PC), a teller machine, or a self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. In addition to the above terminal devices, the terminal 11 may alternatively be a chip within the terminal, such as a modem (Modem) chip or a system on chip (System on Chip, SoC). It should be noted that the embodiments of this application do not impose any limitation on a specific type of the terminal 11. The network-side device 12 may include an access network device or a core network device, where the access network device may also be called a radio access network device, a radio access network (Radio Access Network, RAN), a radio access network function, or a radio access network unit. The access network device may include a base station, a wireless local area network (Wireless Local Area Network, WLAN) access point, or a Wi-Fi node. The base station may be referred to as a NodeB, an evolved NodeB (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission reception point (Transmission Reception Point, TRP), or another appropriate term in the art. Provided that the same technical effect is achieved, the base station is not limited to a specific technical term. It should be noted that the base station in the NR system is only used as an example in the embodiments of this application for illustration, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that the embodiments of this application are described with only the core network device in the NR system as an example, but the core network device is not limited to any specific type.

The following describes in detail the information transmission method provided in the embodiments of this application using some embodiments and application scenarios thereof with reference to the accompanying drawings.

For ease of understanding, the following describes some content involved in the embodiments of this application.

I. Calculation of model accuracy in AI

In the AI field, during the training process of an AI model, accuracy, namely, accuracy in training (Accuracy in Training, AiT), is periodically calculated. For example, AiT is a percentage of the number of correct predictions made by the model relative to the total number of predictions. During the training stage, a validation dataset includes input data and labels (label data), which have a corresponding relationship, where a set of input data corresponds to one (set of) label(s). By comparing the predicted value generated by the model with the label of the current training, the correctness of the current training is determined.

Similarly, the calculation of accuracy in use (Accuracy in Use, AiU) during the inference stage in AI follows the same principle as that in the training stage. For example, the AiU is calculated by dividing the number of correct inferences by the total number of inferences.

II. The process for a task client (also referred to as consumer network function (consumer Network Function, consumer NF)) to obtain AI data analysis results (analytics) from a network data analytics function (Network Data Analytics Function, NWDAF) at the current stage

Functionally, the NWDAF can be decomposed into two network functions, as follows:

model training logical function (Model Training Logical Function, MTLF), configured to generate models or perform model training; and
analytics logical function (Analytics Logical Function, AnLF), configured to perform inference to generate prediction information or generate analysis information.

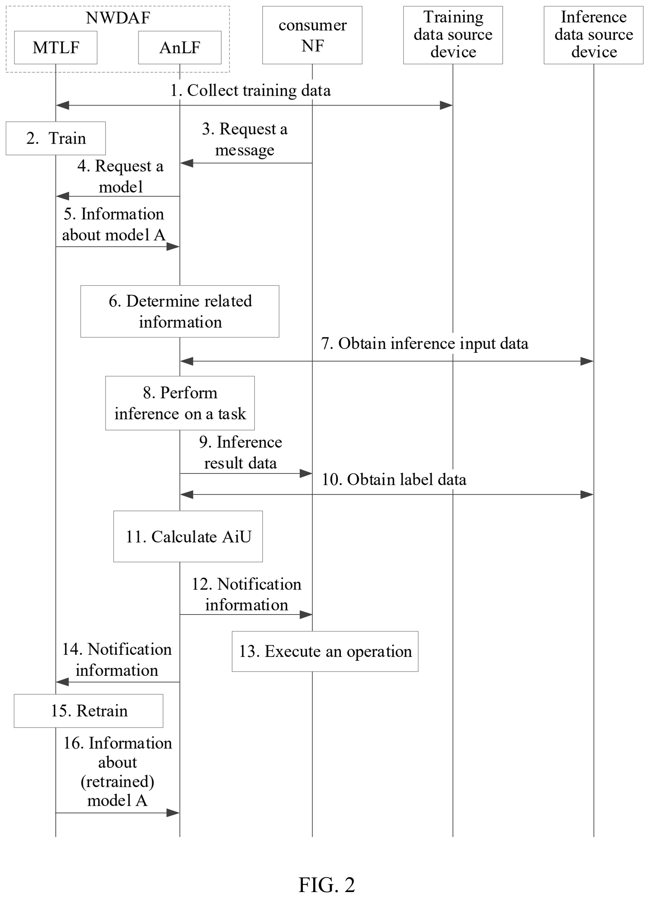

The MTLF and AnLF can be deployed independently as separate network function devices or co-deployed in the same network function device, such as in the NWDAF, which provides both AI model training functions and model inference functions. Specifically, as shown in FIG. 2:

1. The MTLF (the NWDAF containing (containing) the MTLF) collects training data from a training data source device.
2. The MTLF trains model A based on the training data.
3. The consumer NF sends a request message to the AnLF (NWDAF containing AnLF), where the request message is used to request the AnLF to perform analysis or inference for a specific task, and the request message includes:

analytics identification information (analytics ID);
analytics filter information (Analytics Filter Information);
analytics target information (Analytics Target); and the like.

The request message may be an Nnwdaf_AnalyticsSubscription_Subscribe message.
4. The AnLF requests a model (Model) from the MTLF based on the request message.
The message may be an Nnwdaf_MLModelProvision_Subscribe or Nnwdaf_MLModelInfo_Request message, and the message includes:

analytics ID, where this information is used to determine model A to be used; and

analytics filter information.

5. The MTLF sends information about model A and the accuracy (AiT) of the model to the AnLF.

The message transmitting the information may be an Nnwdaf_MLModelProvision_Notify or Nnwdaf_MLModelInfo_Response message.

Note: Steps 1 and 2 can also be executed after Step 4.

6. The AnLF determines the source device of inference input data, the type information of input data, the type information of output data, and other related information based on the received request message.

7. The AnLF obtains inference input data corresponding to the task. Specifically, the AnLF may send a request message for inference input data to the source device determined in Step 6 to collect the inference input data corresponding to the task.

8. The AnLF performs inference based on the obtained model A and inference input data to obtain inference result data.

For example, the AnLF performs inference on inference input data (for example, UE ID, time, UE current service status, and other values) based on model A corresponding to analytics ID = UE mobility (mobility) to obtain inference result data as output data of UE location (location).

The AnLF can obtain one or more output result values by performing one inference calculation process; alternatively, the AnLF can obtain one or more output result values by performing multiple inferences.

9. The AnLF sends the inference result data obtained through inference to the consumer NF.

Through the inference result data, the consumer NF can be informed of the statistical or predicted values obtained through inference by the model corresponding to the analytics ID, which is used to assist the consumer NF in making corresponding policy decisions. For example, the statistical or predicted values corresponding to UE mobility can be used to assist the AMF in optimizing user paging.

10. The AnLF obtains label (label) data corresponding to the inference result data.

The message carrying the label data may be an Nnf_EventExposure_Subscribe message.

Specifically, the AnLF may send a request message for label data to the source device of label data determined in Step 6. The request message includes the type information of the label data, object information corresponding to the label data, time information (such as timestamp and time period), and the like, to determine which label data to feed back to the source device of label data.

11. The AnLF calculates the AiU of model A based on the inference result data and the label data.

12. When the AnLF needs to send the AiU to the consumer NF (for example, when determining that the AiU does not meet the accuracy requirement or the accuracy decreases, or when a periodic sending time arrives), the AnLF sends notification information to the consumer NF, where the notification information is used to notify the consumer NF that the AiU of model A does not meet the accuracy requirement or decreases, or to notify the consumer NF of the AiU of model A.

The message carrying the notification information may be an Nnwdaf_AnalyticsSubscription_Notify message.

13. The consumer NF may execute corresponding operations based on the AiU of model A, for example, stopping or pausing the use of inference result data corresponding to the task.

14. When the AnLF needs to send the AiU to the MTLF (for example, when determining that the AiU does not meet the accuracy requirement or the accuracy decreases, or when a periodic sending time arrives), the AnLF sends notification information to the MTLF, where the notification information is used to notify the MTLF that the accuracy of model A does not meet the accuracy requirement or decreases, or to notify the consumer NF of the accuracy of model A.

The notification information herein may be the same as or different from the communication information in Step 12.

15. The MTLF may execute corresponding operations based on the AiU of model A, for example, retraining (re-train) the model.

16. After the MTLF retrains model A, the MTLF sends the retrained model A or a newly generated model B to the AnLF.

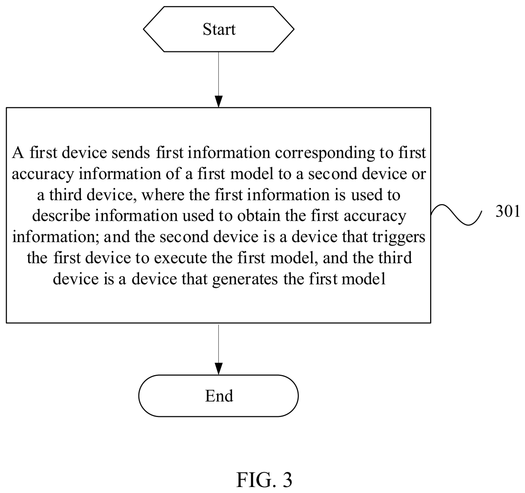

An information transmission method according to an embodiment of this application, as shown in FIG. 3, includes the following steps.

Step 301: A first device sends first information corresponding to first accuracy information of a first model to a second device or a third device, where the first information is used to describe information used to obtain the first accuracy information.

The second device is a device that triggers the first device to execute the first model, and the third device is a device that generates the first model.

Herein, the first model is a model used for inference corresponding to a specific task or a model used for inference corresponding to a specific analytics ID. The first accuracy information of the first model can be understood as: model accuracy (Model Accuracy); or the accuracy of analysis using the first model, namely, analytics accuracy; or the accuracy provided by the first device (such as AnLF) (Accuracy provided by AnLF); or the accuracy of the first model corresponding to the analytics ID, namely, accuracy for an analytics ID or accuracy about an analytics ID; or performance (performance) information of the first model, and the like. The first information is used to describe information used to obtain the first accuracy information, meaning that the first information can explain or describe information about the data used to obtain the first accuracy information, where the data is inference input data.

It should be noted that the data herein can be understood as samples (sampling) or sample data. Each piece of data can be used for the first model to perform one inference (inference). Each piece of data can include one or more parameters, where the one or more parameters herein are input parameters required for the first model to perform inference. Model Accuracy can also be understood as machine learning (Machine Learning, ML) Model Accuracy. It should be noted that the information used to obtain the first accuracy information can also be understood as information used to calculate the first accuracy information or information used to derive the first accuracy information.

It should be noted that the second device being a device that triggers the first device to execute the first model can also be understood as the second device being a device that requests the first device to execute the first model, or the second device being a device that instructs the first device to execute the first model.

Thus, through Step 301, after the first device sends the first information to the second device or the third device, the second device (the device that triggers the first device to execute the first model) or the third device (the device that generates the first model) can understand the information about the data used to obtain the first accuracy information of the first model, and thus can perform subsequent processing based on the first information, which avoids the issue that a large deviation in the first accuracy information affects the usability of inference results.

Optionally, the first information includes at least one of the following:

    the number of data used;
    the number of inferences performed;
    a sampling time of the data used;
    a sampling area of the data used;
    a variance of the data used; and
    a mean of the data used.

Herein, based on the first information describing information used to obtain the first accuracy information, the following can be understood: the number of data used is the number of inference input data used in the process of obtaining the first accuracy information, and can be understood as the number of samples or can be understood as the sample space; the sampling time of the data used is a sampling time of the inference input data used in the process of obtaining the first accuracy information; the sampling area of the data used is a sampling area of the inference input data used in the process of obtaining the first accuracy information; the variance of the data used is a variance of the inference input data used in the process of obtaining the first accuracy information; and the mean of the data used is a mean of the inference input data used in the process of obtaining the first accuracy information.

It should be noted that since each piece of data can be used for the first model to perform one inference, the number of data used to obtain the first accuracy information can also be understood as: the number of inferences (number of inference) performed to obtain the first accuracy information, or the number of inferences performed in obtaining the first accuracy information.

It should be noted that the number of inferences performed in this application can also be understood as: the number of inference outputs (number of inference output) or the number of analytics outputs (number of analytics output).

It should be noted that performing inference and conducting inference have the same meaning in this application and can be used interchangeably, and no further elaboration is provided subsequently.

It should be noted that inference and analytics (analytics) have the same meaning in this application and can be used interchangeably, for example, performing inference has the same meaning as performing analysis, the number of inferences performed has the same meaning as the number of analyses performed, inference output has the same meaning as analysis output, or the number of inference outputs has the same meaning as the number of analysis outputs, and no further elaboration is provided subsequently.

Assuming the first information includes the number of data used as 10, after the first device sends the first information to the second device or the third device, the second device or the third device, based on the first information, considers that due to the small number of samples or the low number of inferences, there is a risk of significant deviation between the first accuracy information of the first model and the actual accuracy, and thus does not execute corresponding operations.

Of course, the first information can also include other information about the inference input data used in the process of obtaining the first accuracy information, which is not listed one by one herein.

As an implementation, the first device sends the first information corresponding to the first accuracy information of the first model and also sends the first accuracy information; or the first device sends the first information corresponding to the first accuracy information of the first model before or after sending the first accuracy information.

Optionally, in this embodiment, the first device includes an analytics logical network function or a network data analytics network function with analytics logical function.

Herein, the analytics logical network function is AnLF, and the network data analytics network function with analytics logical function is NWDAF containing AnLF.

Optionally, in this embodiment, the second device includes a terminal device (UE) or a consumer network function (consumer NF).

Optionally, in this embodiment, the third device includes a model training logical network function or a network data analytics network function with a model training logical function.

Herein, the model training logical network function is MTLF, and the network data analytics network function with model training logical function is NWDAF containing MTLF.

Optionally, that a first device sends first information corresponding to first accuracy information of a first model to a second device or a third device includes:

the first device sends the first information to the second device or the third device in a case that the data used by the first device to obtain the first accuracy information of the first model satisfies second information, where the second information is used to describe requirements for the data used.

It should be noted that the data used by the first device to obtain the first accuracy information of the first model satisfying second information can also be understood as the number of inferences performed by the first device to obtain the first accuracy information of the first model satisfying the second information.

Herein, the second information is used to describe requirements for the data used, meaning that the second information can explain or describe the requirements for the data used to obtain the first accuracy information, restricting the sending of the first information to avoid ineffective transmission of the first information.

It should be noted that the second information being used to describe requirements for the data used can also be understood as the second information being used to describe requirements for the number of inferences performed.

For example, if the second information includes a threshold (threshold) for the number of data used, the threshold is 1000. The first device sends the first information corresponding to the first accuracy information of the first model, such as the sampling time of the data used to obtain the first accuracy information of the first model, only in a case that the number of data used to obtain the first accuracy information of the first model is greater than or equal to 1000. In this example, the number of data used being greater than or equal to 1000 can also be understood as the number of inferences performed being greater than or equal to 1000.

Optionally, the first device sends inference results obtained using the first model to the second device or the third device in a case that the data used by the first model to perform inference satisfies third information, where the third information is used to describe requirements for the data used.

It should be noted that the data used by the first model to perform inference satisfying third information can also be understood as the number of inferences performed by the first model satisfying the third information.

Herein, the third information is used to describe requirements for the data used, meaning that the third information can explain the requirements for the data used by the first model to perform inference, thereby restricting the sending of inference results. The inference results are inference result data. In this way, the second device or the third device that has received the inference results can understand that the data used by the first model to perform inference corresponding to the inference results satisfies the third information, and the second device or the third device can also directly determine whether to use the inference results even without receiving the first information.

It should be noted that the third information being used to describe requirements for the data used can also be understood as the third information being used to describe requirements for the number of inferences performed.

For example, if the third information includes restriction information on the sampling area of the data used, the restriction information on the sampling area is area 1, and the first device sends the inference results obtained by the first model performing inference only in a case that the area of the data used by the first model to perform inference belongs to area 1.

It should be noted that, in this embodiment, if the first device sends the first information based on the second information in the case that the data used to obtain the first accuracy information of the first model satisfies the second information, the first device can send the inference results regardless of whether the data used by the first model to perform inference satisfies the third information. If the first device sends the inference results based on the third information in the case that the data used by the first model to perform inference satisfies the third information, the first device can send the first information regardless of whether the data used to obtain the first accuracy information of the first model satisfies the second information, and at this time, the second device or the third device can determine whether to use the inference results based on the number of inferences.

In this embodiment, the second information and the third information mentioned above may be self-configured by the first device or may be configured by other devices. Optionally, the method further includes:

receiving, by the first device, the second information or third information sent by the second device; or
receiving, by the first device, the second information or third information sent by the third device.

Optionally, the receiving, by the first device, the second information or third information sent by the second device includes:

receiving, by the first device, a first request sent by the second device; where

the first request carries the second information or the third information, and the first request is used to trigger the first device to perform inference using the first model.

In this way, the first device sends at least one of the first information and the inference results in response to the requirements of the second device. Of course, reusing the first request to carry the second information or the third information reduces transmission overheads.

Herein, the first request may be an Nnwdaf_AnalyticsSubscription_Subscribe message.

In this embodiment, the first request triggers inference for a specific task, and the first request includes at least one of analytics ID, analytics filter information, and analytics target. The first device can determine the first model based on the first request, for example, determining the first model through the analytics ID; and the first device can determine a source device of inference input data corresponding to the first model, type information of input data, type information of output data, and the like. In this embodiment, the second device triggers the second device to execute the first model through the first request, where the first model is a model corresponding to the analytics ID included in the first request.

Optionally, the receiving, by the first device, the second information or third information sent by the third device includes:

receiving, by the first device, model-related information sent by the third device, where the model-related information includes the second information or the third information; or
receiving, by the first device, a second request sent by the third device, where the second request carries the second information or the third information, and the second request is used to request the first device to monitor accuracy of the first model.

In this way, the first device sends at least one of the first information and the inference results in response to the requirements of the third device. Of course, reusing the model-related information or the second request to carry the second information or the third information reduces transmission overheads.

The model-related information is fed back by the third device after the third device receives a fourth request sent by the first device, where the fourth request is used to request model-related information. The fourth request includes at least one of analytics filter information and analytics ID, where the analytics ID is used to determine the first model to be used. The fourth request may be an Nnwdaf_MLModelProvision_Subscribe or Nnwdaf_MLModelInfo_Request message. The model-related information may be fed back through an Nnwdaf_MLModelProvision_Notify or Nnwdaf_MLModelInfo_Response message. The model-related information includes information such as the analytics ID.

The second request can also be understood as the third device requesting the first device to assist in monitoring the accuracy of the first model (assist ML Model Accuracy monitoring). The second request can also carry period information to enable the first device to periodically send the first accuracy information of the first model to the third device; and the second request can also carry a preset condition to enable the first device to send the first accuracy information of the first model in a case that the preset condition is met.

Of course, the second information can also be used to restrict the first device from sending the first accuracy information, and the first device sends the first accuracy information to the second device or the third device in a case that the data used by the first device to obtain the first accuracy information of the first model satisfies the second information.

In this embodiment, after receiving the first information, the second device can determine, based on the first information, whether to use inference results obtained by the first model.

Specifically, the second device determines, by combining the first information and the first accuracy information of the first model, whether to use inference results obtained by the first model. For example, the second device stops using the inference results when the accuracy of the first model decreases and the number of samples is less than a threshold for the number of samples or the actual number of inferences is less than a threshold for the number of inferences; and the second device executes corresponding operations, such as using the inference results, only when the number of samples is greater than or equal to the threshold for the number of samples or the actual number of inferences is greater than or equal to the threshold for the number of inferences.

Moreover, in this embodiment, after receiving the first information, the second device can also determine, based on the first information and the first accuracy information, whether to continue using the first device for inference. The second device does not execute any operations and continues using the first device to execute inference of the first model when the accuracy of the first model decreases and the number of samples is less than the threshold for the number of samples or the actual number of inferences is less than the threshold for the number of inferences; and the second device executes corresponding operations, such as stopping the use of the first device, only when the number of samples is greater than or equal to the threshold for the number of samples or the actual number of inferences is greater than or equal to the threshold for the number of inferences.

In this embodiment, for the first model, the third device determines second accuracy information of the first model based on the first information and the first accuracy information of the first model from N devices. Herein, the N devices are all devices that execute inference using the first model. The third device combines these N devices and determines the second accuracy information of the first model based on the first information from each device and the first accuracy information of the first model from each device. It should be noted that the N devices being all devices that execute inference using the first model can also be understood as the N devices being all devices that have requested the model from the third device using the analytics ID corresponding to the first model. The third device, upon receiving the first information and the first accuracy information of the first model from the first device, sends a third request to at least one fifth device (other devices among the N devices excluding the first device, where N is a positive integer greater than or equal to 2) to request their respective first information and first accuracy information of the first model. The third request can also be understood as requesting at least one fifth device to assist in determining the second accuracy information of the first model. Optionally, the third request can also carry the second information as described above, so that the at least one fifth device that has received the second information further sends the first information in a case that the data used to obtain the first accuracy information of the first model satisfies the second information. Optionally, the third request can also carry indication information for instructing the sending of the first information, enabling the fifth device to send the first information to the third device based on the indication information. Optionally, the third request can also carry indication information for instructing immediate sending, enabling the fifth device to immediately send the first information and the first accuracy information of the first model to the third device based on the indication information.

Herein, the third request may be an Nnwdaf_MLModelMonitor_Subscribe message. Optionally, a reporting period (Reporting Period) parameter included in the message has a special value or a specified value, for example, a value of 0, enabling the fifth device to immediately send the first information and the first accuracy information of the first model to the third device based on the special or specified value of the reporting period parameter.

Specifically, the second accuracy information Accuracy of the first model is:

$$\text{Accuracy} = \frac{\sum_{i=1}^{N} Num_i * Accuracy_i}{\sum_{i=1}^{N} Num_i} \; ; \text{ where } Num_i$$

is the number of data provided or the number of inferences performed by an i-th device among the N devices, and $Accuracy_i$ is the first accuracy information of the first model from the i-th device among the N devices.

It should be noted that the second accuracy information can also be referred to as global accuracy (Global Accuracy) information or general accuracy (General Accuracy) information. The second accuracy can be understood as: model accuracy (Model Accuracy) or analytics accuracy; or training accuracy (Training Accuracy); or the accuracy provided by the third device (for example, MTLF) (Accuracy provided by MTLF); or performance (performance) information of the first model, and the like.

It should be noted that the third device determines, based on the second accuracy information, whether the first model has degraded (degrade), or the third device determines, based on the second accuracy information, whether the first model needs to be updated (Update). For example, when the second accuracy information is less than a specific threshold (threshold), the third device determines that the first model has degraded or the first model needs to be updated.

The second accuracy information is accuracy information calculated based on feedback results from multiple devices. The third device can determine the size of N based on requirements. For example, the third device can specify the number of devices participating in accuracy calculation, such as requiring the second accuracy to be calculated based on data from 10 devices, where N equals 10, or requiring the second accuracy to be calculated based on data from 100 devices, where N equals 100; or the third device can specify information about the data participating in accuracy calculation, such as requiring the second accuracy to be calculated based on 1000 pieces of data, where N equals 3 when the total data quantity from the first device and two fifth devices exceeds 1000, or N equals 5 when the total data quantity from the first device and four fifth devices exceeds 1000; or the third device can specify information about the number of inferences participating in accuracy calculation, such as requiring the second accuracy to be calculated based on 1000 inference results, where N equals 3 when the total number of inferences from the first device and two fifth devices exceeds 1000, or N equals 5 when the total number of inferences from the first device and four fifth devices exceeds 1000. Of course, the third device can also specify both the number of devices participating in accuracy calculation and the information about the data participating in accuracy calculation; or the third device can specify both the number of devices participating in accuracy calculation and the information about the number of inferences participating in accuracy calculation.

Additionally, optionally, in this embodiment, the method further includes:

sending, by the first device, fourth information to a fourth device, where the fourth information is used to describe requirements for the training data used to train the first model; or

sending, by the first device, fifth information to the fourth device, where the fifth information is used to describe information about the data usable for performing inference using the first model.

It should be noted that each piece of training data can be used for the first model to perform one training. Each piece of training data can include one or more parameters, where the one or more parameters herein are input parameters required for the first model to perform training.

It should be noted that the fourth information being used to describe requirements for the training data used to train the first model can also be understood as the fourth information being used to describe requirements for the number of trainings of the first model.

It should be noted that the fifth information being used to describe information about the data usable for performing inference using the first model can also be understood as the fifth information being used to describe information about the number of inferences executable for performing inference using the first model.

It should be noted that performing training and conducting training have the same meaning in this application and can be used interchangeably, and no further elaboration is provided subsequently.

Herein, the fourth device may be a network repository function (Network Repository Function, NRF).

In this way, when a device generating the first model sends a registration request to the NRF, where the registration request carries seventh information, and the seventh information is used to describe information about the data used to train the first model, after the first device sends the fourth information to the NRF, the NRF can determine a corresponding third device for the first device based on the fourth information. The first device can carry the fifth information when sending a registration request to the NRF, enabling the NRF to determine, based on the fifth information, that the first device can provide the required inference results for the second device. The registration request herein may be an Nnrf_NFManagement_NFRegister message. The request sent by the first device to the NRF may be an Nnrf_NFDiscovery request.

It should be noted that the seventh information being used to describe information about the data used to train the first model can also be understood as the seventh information being used to describe information about the number of trainings performed in training the first model.

Optionally, in this embodiment, the first accuracy information of the first model is characterized by at least one of the following:

a ratio of the number of correct predictions by the first model to the total number of predictions by the first model;
a root mean square error of the first model;
a recall rate (recall rate) of the first model; and
an F1 score (F1 score) of the first model.

It should be noted that the recall rate can also be referred to as recall degree. The recall rate is a ratio of the number of times the model correctly predicts a specific category to the number of data actually belonging to that category, meaning the proportion of samples correctly predicted as "A" among the samples that are actually "A," which can be used to indicate whether inference or prediction results of a model are complete and comprehensive. For example, among the samples that are actually "A," how many are correctly predicted as "A" samples, where "A" herein may be any category, such as a cell where UE is located and a network load level.

Recall rate = number of samples predicted as "A" and actually "A" ÷ number of samples actually "A".

Precision is a ratio of the number of times the model correctly predicts a certain category to the number of times the model predicts that category, meaning the proportion of samples correctly predicted as "A" among the samples inferred (predicted) as "A," which can be used to indicate the precision of inference of the model. For example, among the samples predicted as "A" by the model, how many are actually "A" samples, where "A" may be any category, such as a cell where UE is located and a network load level.

Precision = number of samples predicted as "A" and actually "A" ÷ number of samples predicted as "A".

Precision and recall rate are inversely related, meaning high precision leads to lower recall rate, and in some scenarios, to balance precision and recall rate, the F1 score (score) is used.

The F1 score is used to comprehensively evaluate precision and recall rate, where a high F1 score indicates both high precision and high recall rate.

The calculation formula for the F1 score is:

$$\frac{2}{F1} = \frac{1}{P(\text{precision})} + \frac{1}{R(\text{recall rate})} \; ; \text{where } P(\text{precision})$$

is a calculation result of precision; and R(recall rate) is a calculation result of recall rate.

Optionally, in this embodiment, the second information, third information, fifth information, or sixth information corresponding to the first model includes at least one of the following:

a threshold for the number of data used;
a threshold for the number of inferences performed;
restriction information on the sampling time period of the data used;
restriction information on the sampling area of the data used;
a threshold for the variance of the data used; and
a threshold for the mean of the data used.

It should be noted that since each piece of data can be used for the first model to perform one inference, the threshold for the number of data used can also be understood as the threshold for the number of inferences performed.

Optionally, in this embodiment, the fourth information or seventh information includes at least one of the following:

the number of data used;

the number of trainings performed;
a sampling time period of the data used;
a sampling area of the data used;
a variance of the data used; and
a mean of the data used.

It should be noted that since each piece of data can be used for the first model to perform one training, the number of data used can also be understood as the number of trainings performed.

The application of the method in the embodiments of this application is described below with reference to specific scenarios:

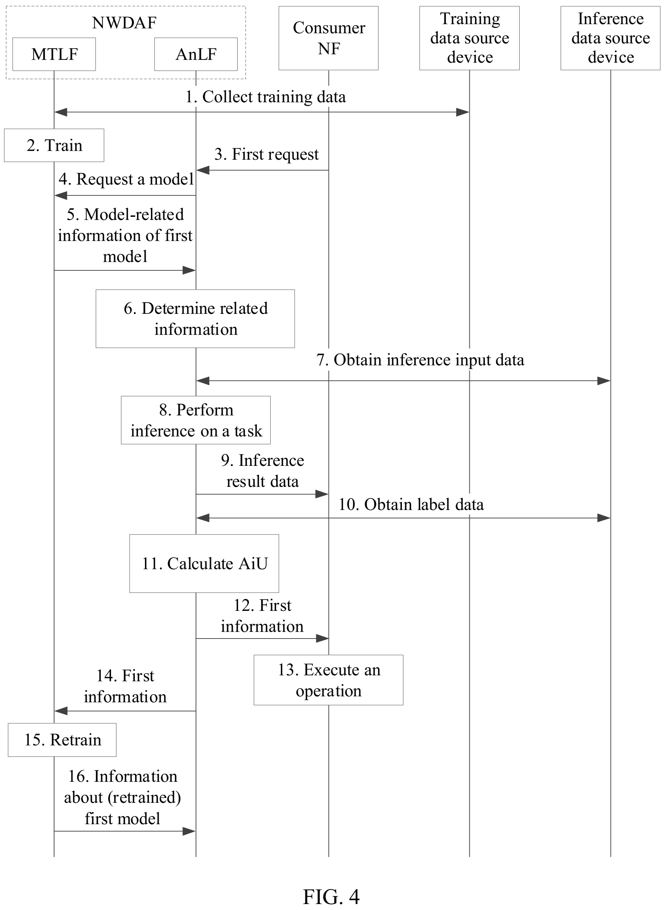

As shown in FIG. 4, the specific process includes the following steps.

Steps 1 and 2 are the same as Steps 1 and 2 in FIG. 2.

3. A consumer NF sends a first request to an AnLF, where the first request includes: analytics ID, analytics filter information, analytics target, and the like. The first request also includes second information or third information. For example, the third information is a first threshold, namely the threshold for the number of data used, which can be understood as the required number of samples, or the minimum required number of samples, or the threshold for the number of inferences performed. The AnLF sends inference results to the consumer NF only when the number of samples is greater than or equal to the first threshold; or the AnLF sends inference results to the consumer NF only when the number of inferences performed is greater than or equal to the first threshold. Of course, the first request may not include the second information or the third information.

The first request may be an Nnwdaf_Analytics-Subscription_Subscribe message.

Step 4 is the same as Step 4 in FIG. 2.

5. An MTLF sends model-related information and accuracy of the model (AiT) to the AnLF.

The model-related information includes second information or third information. For example, the second information is a second threshold, namely the threshold for the number of data used, which can be understood as the required number of samples, or the minimum required number of samples, or the number of inferences performed. The AnLF sends the first information to the consumer NF only when the number of samples is greater than or equal to the second threshold or the number of inferences performed by the AnLF is greater than or equal to the second threshold. Of course, the model-related information may not include the second information or the third information.

Note: Steps 1 and 2 can also be executed after Step 4.

Steps 6-8 are the same as Steps 6-8 in FIG. 2.

9. The AnLF sends inference result data obtained through inference to the consumer NF.

The inference result data can be used to inform the consumer NF of statistical or predicted values obtained through inference by the first model, used to assist the consumer NF in executing corresponding policy decisions. For example, the statistical or predicted values corresponding to UE mobility can be used to assist an AMF in optimizing user paging.

Case 1: The AnLF sends inference results to the consumer NF only when the data used by the first model to perform inference satisfies the third information (for example, the number of data used (namely, the number of samples) being greater than or equal to the first threshold, or the number of inferences performed being greater than or equal to the first threshold), where the threshold may be from the request of the consumer NF in Step 3, or from the model-related information sent by the MTLF in Step 5, or configured by the AnLF itself.

Case 2: The AnLF sends the first information (for example, the number of data used, namely, the number of samples; or the number of inferences performed) to the consumer NF, and the consumer NF can determine, based on the number of samples or the number of inferences performed, whether to use the inference results of the AnLF: does not use the inference results of the AnLF when the number of samples or the number of inferences performed is determined to be less than a third threshold; and the consumer NF starts using the inference results of the AnLF only when the number of samples or the number of inferences performed is determined to be greater than or equal to the third threshold. The third threshold is a condition for determining whether to use the inference results.

Only one of the restrictions in Case 1 or Case 2 needs to exist.

It should be understood that if the restriction in Case 1 does not exist, the AnLF sends inference results to the consumer NF as long as inference results are available, and at this time, the consumer NF determines whether to use the inference results based on the number of inferences.

Steps 10 and 11 are the same as Steps 10 and 11 in FIG. 2.

12. When the AnLF needs to send the first accuracy information (for example, AiU) to the consumer NF (for example, when the first accuracy information is determined not to meet the accuracy requirement or the accuracy decreases, or when a periodic sending time arrives), the AnLF sends the first information to the consumer NF.

The message carrying the first information can also be used to notify the consumer NF that the first accuracy information of the first model does not meet the accuracy requirement or decreases, or to notify the consumer NF of the first accuracy information of the first model.

The message may be an Nnwdaf_Analytics-Subscription_Notify message.

13. The consumer NF can execute corresponding operations based on the first information and the first accuracy information of the first model. For example, when the consumer NF determines that the inference accuracy decreases and the number of samples is less than the threshold for the number of samples, or the number of inferences performed is less than the threshold for the number of inferences, the consumer NF stops using the inference results; and the consumer NF executes corresponding operations, such as using the inference results, only when the consumer NF determines that the number of samples is greater than or equal to the threshold for the number of samples, or the number of inferences performed is greater than or equal to the threshold for the number of inferences.

14. When the AnLF needs to send the first accuracy information to the MTLF (for example, when the AnLF determines that the first accuracy information does not to meet the accuracy requirement or the accuracy decreases, or when a periodic sending time arrives), the AnLF sends the first information to the MTLF.

The message carrying the first information can also be used to notify the MTLF that the first accuracy information of the first model does not meet the accuracy requirement or decreases, or to notify the consumer NF of the first accuracy information of the first model.

The first information sent by the AnLF to the consumer NF and the MTLF may be the same or different.

Steps 15 and 16 are the same as Steps 15 and 16 in FIG. 2.

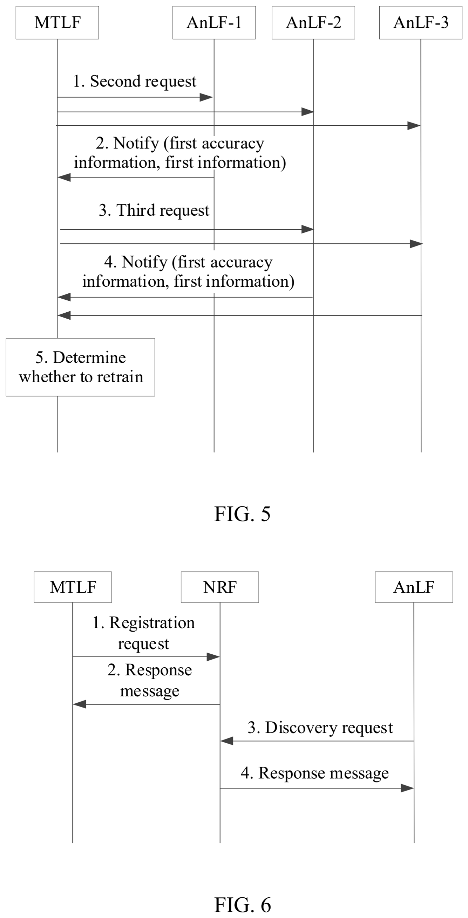

Additionally, as shown in FIG. 5 (where Step 2 in FIG. 5 corresponds to Step 14 in FIG. 4, meaning the AnLF in FIG. 4 is AnLF-1 in FIG. 5), the MTLF can also execute the following steps.

1. Optionally, an MTLF sends a second request to the AnLF-1, where the second request is used to request the AnLF to assist in monitoring the first accuracy information of the first model (assist ML model accuracy monitoring). Of course, the MTLF can also consider other AnLFs using the first model as the first device and send the second request to them. Each AnLF can periodically send the first accuracy information of the first model to the MTLF, or send the first inference accuracy information when a decrease in the first inference accuracy information of the first model is detected.

Optionally, the MTLF includes the second information or third information in these requests. For example, the request includes the second information, namely, the threshold for the number of data used or the threshold for the number of inferences performed (for example, a third threshold), and the AnLF reports the first accuracy information or the first information of the first model to the MTLF only when the number of samples used for inference or the number of inferences performed is greater than or equal to the third threshold during inference using the first model.

2. When the reporting period of the AnLF-1 arrives, or the inference accuracy of the first model decreases, the AnLF-1 reports the first accuracy information of the first model to the MTLF, and also reports the first information (for example, the number of data used to obtain the first accuracy information or the number of inferences performed to obtain the first accuracy information).

3. When the MTLF determines that a preset condition is met, for example, when the first accuracy information of the first model from the AnLF-1 decreases, the MTLF sends a third request to other AnLFs using the first model, where the third request is used to request the AnLFs to immediately send the first accuracy information and the first information of the first model to the MTLF.

4. At least one AnLF sends their respective first accuracy information and first information of the first model to the MTLF.

5. The MTLF comprehensively determines the second accuracy information of the first model based on the first accuracy information and the first information of the first model from multiple AnLFs and determines whether retraining is required.

The second accuracy information of the first model can be calculated using the following formula:

$$\text{Accuracy} = \frac{\sum_{i=1}^{N} Num_i * Accuracy_i}{\sum_{i=1}^{N} Num_i} \; ; \text{ where } Num_i$$

is the number of data provided or the number of inferences performed by an i-th device among the N devices, and $Accuracy_i$ is the first accuracy information of the first model from the i-th device among the N devices. In FIG. 5, N=3.

Herein, the third request may be an Nnwdaf_MLModelMonitor_Subscribe message. Optionally, a reporting period (Reporting Period) parameter included in the message has a special value or a specified value, for example, a value of 0, enabling the fifth device to immediately send the first information and the first accuracy information of the first model to the third device based on the special or specified value of the reporting period parameter.

Additionally, as shown in FIG. 6, after Step 2 in FIG. 3, the MTLF can also send a registration request to an NRF, where the registration request includes an analytics ID supported by the MTLF, service scope information of the MTLF, supported analysis latency, model filter information (slice identifier, area of interest), and the like. The registration request also includes seventh information, where the seventh information is used to describe information about the data used to train the first model. The registration request may be an Nnrf_NFManagement_NFRegister_request message. The NRF sends a response message after receiving the registration request, where the response message may be an Nnrf_NFManagement_NFRegister_response message. The AnLF sends a discovery request to the NRF, where the discovery request includes the analytics ID, model filter information, and fourth information, where the fourth information is used to describe requirements for the training data used to train the first model or requirements for the number of trainings performed to train the first model. The discovery request may be an Nnrf_NFDiscovery_Request message. The NRF returns a response message including an address of the MTLF based on the discovery request of the AnLF. The response message may be an Nnrf_NFDiscovery _Response message.

Of course, the registration request may not include the seventh information. The discovery request may not include the fourth information.

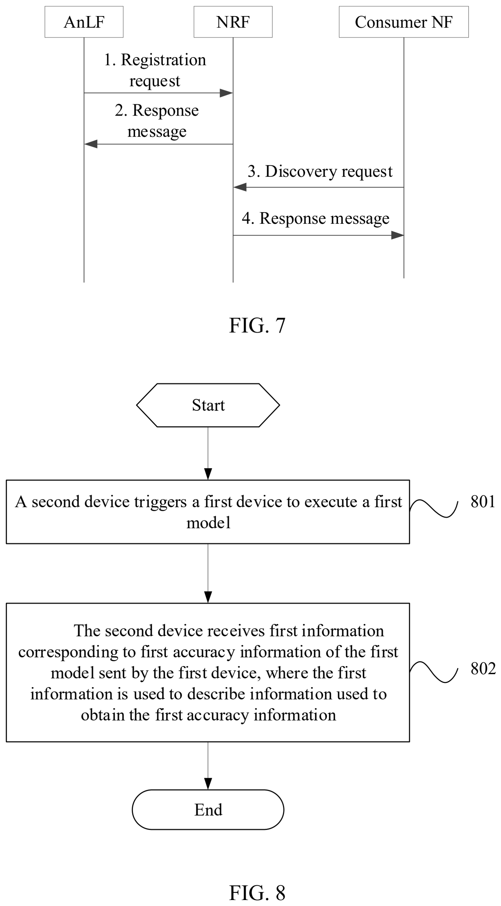

Alternatively, before Step 3 shown in FIG. 3, as shown in FIG. 7, the AnLF sends a registration request to an NRF, where the registration request includes the analytics ID supported by the AnLF, service scope information of the AnLF, supported analysis latency, model filter information (slice identifier, area of interest (area of interest, AOI)), and the like. The registration request also includes fifth information, where the fifth information is used to describe information about the data executable for performing inference using the first model or information about the number of inferences that can be performed in performing inference using the first model. The registration request can be an Nnrf_NFManagement_NFRegister_request message. The NRF sends a response message after receiving the registration request, where the response message may be an Nnrf_NFManagement_NFRegister_response message. The consumer NF sends a discovery request to the NRF, where the discovery request includes the analytics ID, model filter information, and information being used to describe requirements for the inference data used to infer the first model. The discovery request may be an Nnrf_NFDiscovery_Request message. The NRF returns a response message including an address of the AnLF based on the discovery request of the consumer NF. The response message may be an Nnrf_NFDiscovery _Response message.

In summary, the method in the embodiments of this application achieves accurate evaluation of the inference accuracy of the model, avoiding the impact on the usability of inference results.

As shown in FIG. 8, an information transmission method according to an embodiment of this application includes the following steps.

Step 801: A second device triggers a first device to execute a first model.

Step 802: The second device receives first information corresponding to first accuracy information of the first model sent by the first device, where the first information is used to describe information used to obtain the first accuracy information.

Herein, the second device triggers the first device to execute the first model, meaning that the first model performs inference, and after the first device sends the first information to the second device, the second device can understand the information about the data used to obtain the first accuracy information of the first model or the information about the number of trainings performed to obtain the first accuracy information of the first model, and thus can perform subsequent processing based on the first information, which avoids the issue that a large deviation in the first accuracy information affects the usability of inference results.

Optionally, the first information includes at least one of the following:

the number of data used;
the number of inferences performed using the first model;
a sampling time of the data used;
a sampling area of the data used;
a variance of the data used; and
a mean of the data used.

Optionally, that the second device receives first information corresponding to first accuracy information of the first model sent by the first device includes:
the second device receives the first information in a case that the data used by the first device to obtain the first accuracy information of the first model satisfies second information, where the second information is used to describe requirements for the data used.

It should be noted that the data used by the first device to obtain the first accuracy information of the first model satisfying second information can also be understood as the number of inferences performed by the first device to obtain the first accuracy information of the first model satisfying the second information. Optionally, the method further includes:
receiving, by the second device, inference results obtained using the first model and sent by the first device, in a case that the data used by the first model to perform inference satisfies third information, where the third information is used to describe requirements for the data used.

It should be noted that the data used by the first model to perform inference satisfying third information can also be understood as the number of inferences performed by the first model satisfying the third information.

Optionally, the method further includes:
the second device sends second information or third information to the first device.

Optionally, that the second device sends second information or third information to the first device includes:

the second device sends a first request to the first device; where
the first request carries the second information or the third information, and the first request is used to trigger the first device to perform inference using the first model.

Optionally, the method further includes: the second device determines, based on the first information, whether to use inference results obtained by the first model.

Optionally, the method further includes:

the second device receives the first accuracy information of the first model sent by the first device, where the first accuracy information corresponds to the first information; and

the second device determines based on the first accuracy information and the first information, whether to continue using the first device for inference.

Optionally, the method further includes: the second device sends sixth information to a fourth device, where the sixth information is used to describe requirements for the data usable for performing inference using the first model.

It should be noted that the sixth information being used to describe requirements for the data usable for performing inference using the first model can also be understood as the sixth information being used to describe requirements for the number of inferences executable for performing inference using the first model.

Herein, the second device sends the sixth information to the fourth device (for example, NRF), enabling the fourth device to provide the second device with an adapted first device for inference, where the first device executes the first model for inference.

Optionally, the second information, third information or sixth information corresponding to the first model includes at least one of the following:

a threshold for the number of data used;
a threshold for the number of inferences performed;
restriction information on the sampling time period of the data used;
restriction information on the sampling area of the data used;
a threshold for the variance of the data used; and
a threshold for the mean of the data used.

It should be noted that since each piece of data can be used for the first model to perform one inference, the threshold for the number of data used can also be understood as the threshold for the number of inferences performed.

Optionally, the second device includes a terminal device or a consumer network function.

It should be noted that the method is implemented in cooperation with the method executed by the first device described above, and the implementation manners of the above method embodiments are applicable to this method, with the same technical effects achieved, and no further elaboration is provided herein.

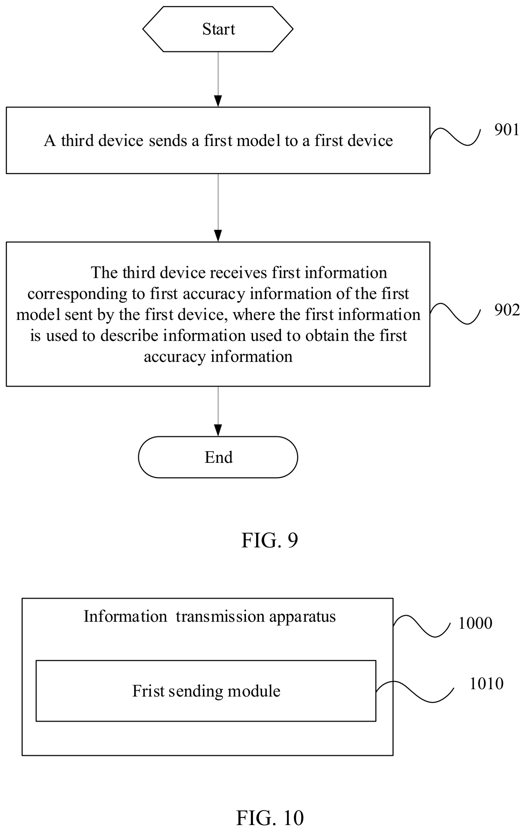

As shown in FIG. 9, an information transmission method according to an embodiment of this application includes the following steps.

Step 901: A third device sends a first model to a first device.

Specifically, the third device sends model information of the first model.

Step 902: The third device receives first information corresponding to first accuracy information of the first model sent by the first device, where the first information is used to describe information used to obtain the first accuracy information.

Herein, the third device sends the first model to the first device, and the first device can execute the first model and send the first information to the third device, enabling the third device to understand the information about the data used to obtain the first accuracy information of the first model, and thus can perform subsequent processing based on the first information, which avoids the issue that a large deviation in the first accuracy information affects the usability of inference results.

Optionally, the first information includes at least one of the following:

the number of data used;
the number of inferences performed;
a sampling time of the data used;
a sampling area of the data used;
a variance of the data used; and
a mean of the data used.

Optionally, that the third device receives first information corresponding to first accuracy information of the first model sent by the first device includes: the third device receives the first information in a case that the data used by the first device to obtain the first accuracy information of the first model satisfies second information, where the second information is used to describe requirements for the data used or requirements for the number of inferences performed or requirements for the number of inferences performed using the first model.

Optionally, the method further includes: the third device receives inference results obtained using the first model and sent by the first device, in a case that the data used by the first model to perform inference satisfies third information, where the third information is used to describe requirements for the data used or requirements for the number of inferences performed.

Optionally, the method further includes: the third device sends second information or third information to the first device.

Optionally, the third device sending the second information or third information to the first device includes:

the third device sends model-related information to the first device, where the model-related information includes the second information or the third information; or

the third device sends a second request to the first device, where the second request carries the second information or the third information, and the second request is used to request the first device to monitor accuracy of the first model.

Optionally, the method further includes:
the third device receives the first accuracy information of the first model sent by the first device, where the first accuracy information corresponds to the first information.

Optionally, the method further includes:

the third device determines second accuracy information of the first model based on the first information and the first accuracy information of the first model from N devices; where
the N devices include the first device and at least one fifth device, and the at least one fifth device is a device using the first model; and
N is a positive integer greater than or equal to 2.

Optionally, the method further includes:
the third device sends a third request to the at least one fifth device in a case that the first information and the first accuracy information of the first model from the first device are received, where the third request is used to request the first information and the first accuracy information of the first model from the at least one fifth device.

Optionally, the third request includes second information, where the second information is used to describe requirements for the data used or requirements for the number of inferences performed.

Optionally, the third request can also carry indication information for instructing the sending of the first information, enabling the fifth device to send the first information to the third device based on the indication information. Optionally, the third request can also carry indication information for instructing immediate sending, enabling the fifth device to immediately send the first information and the first accuracy information of the first model to the third device based on the indication information.

Herein, the third request may be an Nnwdaf_MLModelMonitor_Subscribe message. Optionally, a reporting period (Reporting Period) parameter included in the message has a special value or a specified value, for example, a value of 0, enabling the fifth device to immediately send the first information and the first accuracy information of the first model to the third device based on the special or specified value of the reporting period parameter.

Optionally, that the third device determines second accuracy information of the first model based on the first information and the first accuracy information of the first model from N devices includes:

calculating the second accuracy information Accuracy of the first model using the formula

$$Accuracy = \frac{\sum_{i=1}^{N} Num_i * Accuracy_i}{\sum_{i=1}^{N} Num_i} \text{ ; where}$$

$Num_i$ is the number of data provided or the number of inferences performed by an i-th device among the N devices, and $Accuracy_i$ is the first accuracy information of the first model from the i-th device among the N devices.

It should be noted that the third device determines, based on the second accuracy information, whether the first model has degraded (degrade), or the third device determines, based on the second accuracy information, whether the first model needs to be updated (Update). For example, when the second accuracy information is less than a specific threshold (threshold), the third device determines that the first model has degraded or the first model needs to be updated.

Optionally, the method further includes:
the third device sends seventh information to a fourth device, where the seventh information is used to describe information about the data used to train the first model or information about the number of trainings performed to train the first model.

Herein, the third device sends the seventh information to the fourth device (for example, NRF) to enable the NRF to know the information about the data used to train the first model, thereby facilitating the recommendation of the third device to a suitable first device.

Optionally, the seventh information is carried to the NRF via a registration request sent by the third device.

Optionally, the seventh information includes at least one of the following:

the number of data used;
the number of trainings performed;
a sampling time period of the data used;
a sampling area of the data used;
a variance of the data used; and
a mean of the data used.

It should be noted that since each piece of data can be used for the first model to perform one training, the number of data used can also be understood as the number of trainings performed.

Optionally, the method further includes:
the third device determines, based on the second accuracy information, whether to retrain the first model.

For example, a fourth threshold corresponding to the second accuracy information is preset, and after the third device determines the second accuracy information, by comparing the second accuracy information with the fourth threshold, in a case that the second accuracy information is less than the fourth threshold, the third device retrains the first model to improve the inference accuracy of the first model ; and in a case that the second accuracy information is greater than or equal to the fourth threshold, the third device does not need to retrain the first model.

Optionally, the second information or third information corresponding to the first model includes at least one of the following:

> a threshold for the number of data used;
> a threshold for the number of inferences performed;
> restriction information on the sampling time period of the data used;
> restriction information on the sampling area of the data used;
> a threshold for the variance of the data used; and
> a threshold for the mean of the data used.

It should be noted that since each piece of data can be used for the first model to perform one inference, the threshold for the number of data used can also be understood as the threshold for the number of inferences performed.

Optionally, the third device includes a model training logical network function or a network data analytics network function with a model training logical function.

It should be noted that the method is implemented in cooperation with the method executed by the first device described above, and the implementation manners of the above method embodiments are applicable to this method, with the same technical effects achieved, and no further elaboration is provided herein.

An information transmission method provided in the embodiments of this application can be executed by an information transmission apparatus. In the embodiments of this application, the information transmission apparatus executing the information transmission method is used as an example to describe the information transmission apparatus provided in the embodiments of this application.

As shown in FIG. 10, an information transmission apparatus 1000 according to an embodiment of this application includes:

> a first sending module 1010, configured to send first information corresponding to first accuracy information of a first model to a second device or a third device, where the first information is used to describe information used to obtain the first accuracy information; and
> the second device is a device that triggers a first device to execute the first model, and the third device is a device that generates the first model.

After the apparatus sends the first information to the second device (the device that triggers the first device to execute the first model) or the third device (the device that generates the first model), the second device or the third device can understand the information about the data used to obtain the first accuracy information of the first model, and thus can perform subsequent processing based on the first information, which avoids the issue that a large deviations in the first accuracy information affects the usability of inference results.

Optionally, the first information includes at least one of the following:

> the number of data used;
> the number of inferences performed;
> a sampling time of the data used;
> a sampling area of the data used;
> a variance of the data used; and
> a mean of the data used.

Optionally, the first sending module is further configured to:

send the first information to the second device or the third device in a case that the data used by the first device to obtain the first accuracy information of the first model satisfies second information, where the second information is used to describe requirements for the data used or requirements for the number of inferences performed or requirements for the number of inferences performed using the first model.

Optionally, the apparatus further includes:

a third sending module, configured to send inference results obtained using the first model to the second device or the third device in a case that the data used by the first model to perform inference satisfies third information, where the third information is used to describe requirements for the data used or requirements for the number of inferences performed.

Optionally, the apparatus further includes:

> a third receiving module, configured to receive second information or third information sent by the second device; and
> a fourth receiving module, configured to receive second information or third information sent by the third device.

Optionally, the third receiving module is further configured to:

> receive a first request sent by the second device; where
> the first request carries the second information or the third information, and the first request is used to trigger the first device to perform inference using the first model.

Optionally, the fourth receiving module is further configured to:

> receive model-related information sent by the third device, where the model-related information includes the second information or the third information; or

receive a second request sent by the third device, where the second request carries the second information or the third information, and the second request is used to request the first device to monitor accuracy of the first model.

Optionally, the apparatus further includes:

a fourth sending module, configured to send fourth information to a fourth device, where the fourth information is used to describe requirements for the training data used to train the first model or requirements for the number of trainings performed; and a fifth sending module, configured to send fifth information to the fourth device, where the fifth information is used to describe information about the data executable for performing inference using the first model.

Optionally, the first accuracy information of the first model is characterized by at least one of the following:

a ratio of the number of correct predictions by the first model to the total number of predictions by the first model;
a root mean square error of the first model;
a recall rate of the first model; and
an F1 score of the first model.

Optionally, the second information, third information, or fourth information corresponding to the first model includes at least one of the following:

a threshold for the number of data used;
a threshold for the number of inferences performed;
restriction information on the sampling time period of the data used;
restriction information on the sampling area of the data used;
a threshold for the variance of the data used; and
a threshold for the mean of the data used.

Optionally, the fifth information includes at least one of the following:

the number of data used;
the number of inferences performed;
a sampling time period of the data used;
a sampling area of the data used;
a variance of the data used; and
a mean of the data used.

Optionally, the first device includes an analytics logical network function or a network data analytics network function with an analytics logical function.

The information transmission apparatus provided in the embodiments of this application can implement the processes realized by the method embodiments of FIGs. 3 to 7, with the same technical effects achieved, and no further elaboration is provided herein to avoid repetition.

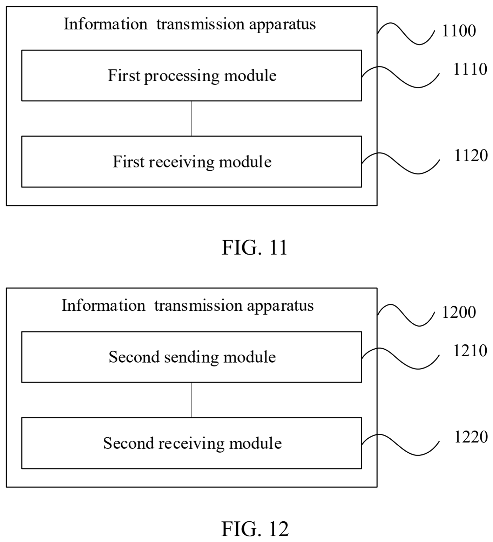

As shown in FIG. 11, an information transmission apparatus 1100 according to an embodiment of this application includes:

a first processing module 1110, configured to trigger a first device to execute a first model; and
a first receiving module 1120, configured to receive first information corresponding to first accuracy information of the first model sent by the first device, where the first information is used to describe information used to obtain the first accuracy information.

The apparatus triggers the first device to execute the first model, meaning that the first model performs inference, and after the first device sends the first information to a second device, the second device can understand the information about the data used to obtain the first accuracy information of the first model, and thus can perform subsequent processing based on the first information, which avoids the issue that a large deviation in the first accuracy information affects the usability of inference results.

Optionally, the first information includes at least one of the following:

the number of data used;
the number of inferences performed;
a sampling time of the data used;
a sampling area of the data used;
a variance of the data used; and
a mean of the data used.

Optionally, the first receiving module is further configured to:
receive the first information in a case that the data used by the first device to obtain the first accuracy information of the first model satisfies second information, where the second information is used to describe requirements for the data used or requirements for the number of inferences performed or requirements for the number of inferences performed using the first model.

Optionally, the apparatus further includes:
a fifth receiving module, configured to receive inference results obtained using the first model and sent by the first device, in a case that the data used by the first model to perform inference satisfies third information, where the third information is used to describe requirements for the data used or requirements for the number of inferences performed.

Optionally, the apparatus further includes:
a sixth sending module, configured to send second information or third information to the first device.

Optionally, the sixth sending module is further configured to:

> send a first request to the first device; where
> the first request carries the second information or the third information, and the first request is used to trigger the first device to perform inference using the first model.

Optionally, the apparatus further includes:
a second processing module, configured to determine whether to use the inference results obtained by the first model based on the first information.

Optionally, the apparatus further includes:

> a sixth receiving module, configured to receive the first accuracy information of the first model sent by the first device, where the first accuracy information corresponds to the first information; and
> a third processing module, configured to determine, based on the first accuracy information and the first information, whether to continue using the first device for inference.

Optionally, the apparatus further includes:
a seventh sending module, configured to send sixth information to a fourth device, where the sixth information is used to describe requirements for the data executable for performing inference using the first model or requirements for the number of inferences performed.

Optionally, the second information, third information, or sixth information corresponding to the first model includes at least one of the following:

> a threshold for the number of data used;
> a threshold for the number of inferences performed;
> restriction information on the sampling time period of the data used;
> restriction information on the sampling area of the data used;
> a threshold for the variance of the data used; and
> a threshold for the mean of the data used.

Optionally, the second device includes a terminal device or a consumer network function.

The information transmission apparatus provided in the embodiments of this application can implement the processes realized by the method embodiment of FIG. 8, with the same technical effects achieved, and no further elaboration is provided herein to avoid repetition.

As shown in FIG. 12, an information transmission apparatus 1200 according to an embodiment of this application includes:

> a second sending module 1210, configured to send a first model to a first device; and
> a second receiving module 1220, configured to receive first information corresponding to first accuracy information of the first model sent by the first device, where the first information is used to describe information used to obtain the first accuracy information.

The apparatus sends the first model to the first device, and the first device can execute the first model and send the first information to a third device, enabling the third device to understand the information about the data used to obtain the first accuracy information of the first model, and thus can perform subsequent processing based on the first information, which avoids the issue that a large deviation in the first accuracy information affects the usability of inference results.

Optionally, the first information includes at least one of the following:

> the number of data used;
> the number of inferences performed;
> a sampling time of the data used;
> a sampling area of the data used;
> a variance of the data used; and
> a mean of the data used.

Optionally, the second receiving module is further configured to:
receive the first information in a case that the data used by the first device to obtain the first accuracy information of the first model satisfies second information, where the second information is used to describe requirements for the data used or requirements for the number of inferences performed or requirements for the number of inferences performed using the first model.

Optionally, the apparatus further includes:
a seventh receiving module, configured to receive inference results obtained using the first model and sent by the first device, in a case that the data used by the first model to perform inference satisfies third information, where the third information is used to describe requirements for the data used or requirements for the number of inferences performed.

Optionally, the apparatus further includes:
an eighth sending module, configured to send second information or third information to the first device.

Optionally, the eighth sending module is further configured to:

> send model-related information to the first device, where the model-related information includes the second information or the third information; or
> send a second request to the first device, where the second request carries the second information or the third information, and the second request is used to request the first device to monitor accuracy of the first model.

Optionally, the apparatus further includes:
an eighth receiving module, configured to receive the first accuracy information of the first model sent by the first device, where the first accuracy information corresponds to the first information.

Optionally, the apparatus further includes:

a fourth processing module, configured to determine second accuracy information of the first model based on the first information and the first accuracy information of the first model from N devices; where the N devices include the first device and at least one fifth device, and the at least one fifth device is a device using the first model; and N is a positive integer greater than or equal to 2.

Optionally, the apparatus further includes:
a ninth sending module, configured to send a third request to the at least one fifth device in a case that the first information and the first accuracy information of the first model from the first device are received; where the third request is used to request the first information and the first accuracy information of the first model from the at least one fifth device.

Optionally, the third request includes second information, where the second information is used to describe requirements for the data used.

Optionally, the third request can also carry indication information for instructing the sending of the first information, enabling the fifth device to send the first information to the third device based on the indication information. Optionally, the third request can also carry indication information for instructing immediate sending, enabling the fifth device to immediately send the first information and the first accuracy information of the first model to the third device based on the indication information.

Herein, the third request may be an Nnwdaf_MLModelMonitor_Subscribe message. Optionally, a reporting period (Reporting Period) parameter included in the message has a special value or a specified value, for example, a value of 0, enabling the fifth device to immediately send the first information and the first accuracy information of the first model to the third device based on the special or specified value of the reporting period parameter.

Optionally, the fourth processing module is further configured to:

calculate the second accuracy information Accuracy of the first model using the formula $\text{Accuracy} = \frac{\sum_{i=1}^{N} Num_i * Accuracy_i}{\sum_{i=1}^{N} Num_i}$ ; where

$Num_i$ is the number of data provided or the number of inferences performed by an i-th device among the N devices, and $Accuracy_i$ is the first accuracy information of the first model from the i-th device among the N devices.

It should be noted that the third device determines, based on the second accuracy information, whether the first model has degraded (degrade), or the third device determines, based on the second accuracy information, whether the first model needs to be updated (Update). For example, when the second accuracy information is less than a specific threshold (threshold), the third device determines that the first model has degraded or the first model needs to be updated.

Optionally, the apparatus further includes:
a tenth sending module, configured to send seventh information to a fourth device, where the seventh information is used to describe information about the data used to train the first model or information about the number of trainings performed to train the first model.

Optionally, the seventh information includes at least one of the following:

the number of data used;
the number of trainings performed;
a sampling time period of the data used;
a sampling area of the data used;
a variance of the data used; and
a mean of the data used.

Optionally, the apparatus further includes:
a fifth processing module, configured to determine, based on the second accuracy information, whether to retrain the first model.

Optionally, the second information or third information corresponding to the first model includes at least one of the following:

a threshold for the number of data used;
a threshold for the number of inferences performed;
restriction information on the sampling time period of the data used;
restriction information on the sampling area of the data used;
a threshold for the variance of the data used; and
a threshold for the mean of the data used.

Optionally, the third device includes a model training logical network function or a network data analytics network function with a model training logical function.

The information transmission apparatus provided in the embodiments of this application can implement the processes realized by the method embodiment of FIG. 9, with the same technical effects achieved, and no further elaboration is provided herein to avoid repetition.

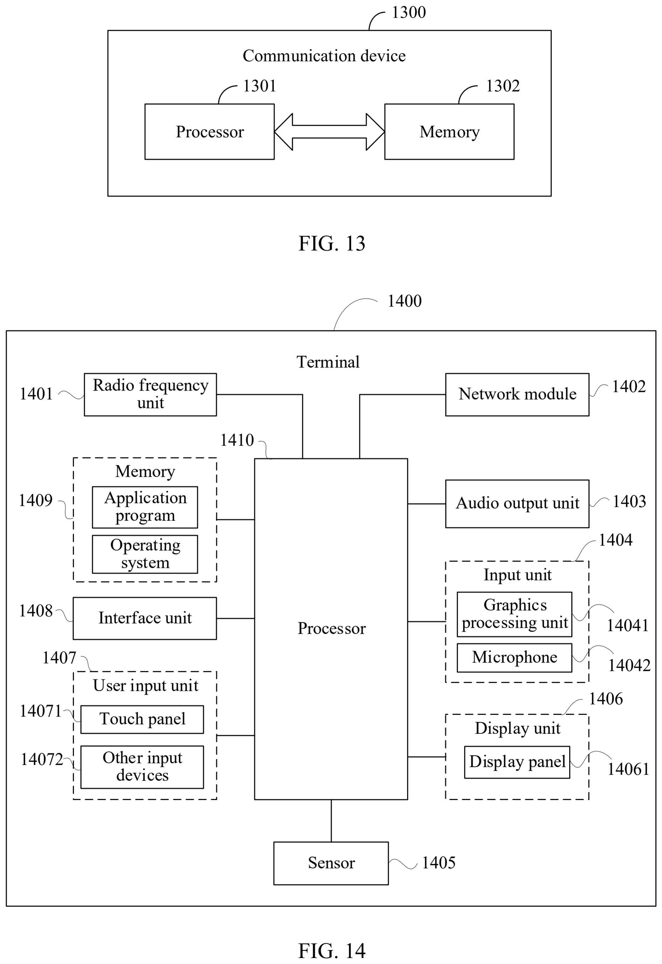

Optionally, as shown in FIG. 13, an embodiment of this application further provides a communication device 1300, including a processor 1301 and a memory 1302, where the memory 1302 stores a program or instructions capable of running on the processor 1301. For example, when the communication device 1300 is a first device, the program or instructions are executed by the processor 1301 to implement the steps of the foregoing embodiment of the information transmission method executed by the first device, with the same technical effects achieved. When the communication device 1300 is a second device, the program or instructions are executed by the processor 1301 to implement the steps of the embodiment of the information transmission method executed by the second device, with the same technical effects achieved. When the communication device 1300 is a third device, the program or instructions are executed by the processor 1301 to implement the steps of the embodiment of the information transmission method executed by the third device, with the same technical effects achieved. No further elaboration is provided herein to avoid repetition.

An embodiment of this application further provides a communication device, including a processor and a communication interface, where the communication interface is configured to send first information corresponding to first accuracy information of a first model to a second device or a third device, and the first information is used to describe information used to obtain the first accuracy information; and

the second device is a device that triggers a first device to execute the first model, and the third device is a device that generates the first model.

The communication device embodiment corresponds to the foregoing first device side method embodiment. All implementations in the foregoing method embodiment may be applicable to the terminal embodiment, with the same technical effect achieved.

An embodiment of this application further provides a communication device, including a processor and a communication interface, where the processor is configured to trigger a first device to execute a first model; and

the communication interface is configured to receive first information corresponding to first accuracy information of the first model sent by the first device, where the first information is used to describe information used to obtain the first accuracy information.

The communication device embodiment corresponds to the foregoing second device side method embodiment. All implementations in the foregoing method embodiment may be applicable to the terminal embodiment, with the same technical effect achieved.

An embodiment of this application further provides a communication device, including a processor and a communication interface, where the communication interface is configured to send a first model to a first device; and the communication interface is further configured to receive first information corresponding to first accuracy information of the first model sent by the first device, where the first information is used to describe information used to obtain the first accuracy information.

The communication device embodiment corresponds to the foregoing third device side method embodiment. All implementations in the foregoing method embodiment may be applicable to the terminal embodiment, with the same technical effect achieved.

Specifically, FIG. 14 is a schematic diagram of a hardware structure of a terminal for implementing an embodiment of this application as a second device.

The terminal 1400 includes, but is not limited to, at least some of the following components: a radio frequency unit 1401, a network module 1402, an audio output unit 1403, an input unit 1404, a sensor 1405, a display unit 1406, a user input unit 1407, an interface unit 1408, a memory 1409, and a processor 1410.

Persons skilled in the art can understand that the terminal 1400 may further include a power supply (for example, a battery) for supplying power to the components. The power supply may be logically connected to the processor 1410 through a power management system. In this way, functions such as charge management, discharge management, and power consumption management are implemented by using the power management system. The structure of the terminal shown in FIG. 14 does not constitute any limitation on the terminal. The terminal may include more or fewer components than shown in the figure, or a combination of some components, or the components disposed differently. Details are not described herein again.

It should be understood that in this embodiment of this application, the input unit 1404 may include a graphics processing unit (Graphics Processing Unit, GPU) 14041 and a microphone 14042. The graphics processing unit 14041 processes image data of a static picture or a video that is obtained by an image capture apparatus (for example, a camera) in a video capture mode or an image capture mode. The display unit 1406 may include a display panel 14061, and the display panel 14061 may be configured in a form of a liquid crystal display, an organic light-emitting diode, and the like. The user input unit 1407 includes at least one of a touch panel 14071 and other input devices 14072. The touch panel 14071 is also referred to as a touchscreen. The touch panel 14071 may include two parts: a touch detection apparatus and a touch controller. The other input devices 14072 may include but are not limited to a physical keyboard, a function key (for example, a volume control key or a power on/off key), a trackball, a mouse, a joystick, and the like. Details are not described herein.

In this embodiment of this application, after receiving downlink data from a network-side device, the radio frequency unit 1401 may transmit the downlink data to the processor 1410 for processing. In addition, the radio frequency unit 1401 may transmit uplink data to the network-side device. Generally, the radio frequency unit 1401 includes but is not limited to an antenna, an amplifier, a transceiver, a coupler, a low noise amplifier, and a duplexer.

The memory 1409 may be configured to store software programs or instructions and various data. The memory 1409 may include first storage area for storing programs or instructions and a second storage area for storing data. The first storage area may store an operating system, an application program or instruction required by at least one function (for example, a sound playback function or an image playback function), and the like. In addition, the memory 1409 may include either a volatile memory or a non-volatile memory, or the memory 1409 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch Link DRAM, SLDRAM), and a direct rambus random access memory (Direct Rambus RAM, DRRAM). The memory 1409 in this embodiment of this application includes but is not limited to these and any other suitable types of memories.

The processor 1410 may include one or more processing units. Optionally, an application processor and a modem processor are integrated in the processor 1410. The application processor primarily processes operations relating to an operating system, user interfaces, application programs, and the like. The modem processor primarily processes radio communication signals, for example, being a baseband processor. It can be understood that the modem processor may alternatively be not integrated in the processor 1410.

The terminal can trigger the first device to execute the first model, meaning that the first model performs inference. In this way, after the first device sends the first information to the second device, the second device can understand the information about the data used to obtain the first accuracy information of the first model, and thus can perform subsequent processing based on the first information, which avoids the issue that a large deviation in the first accuracy information affects the usability of inference results.

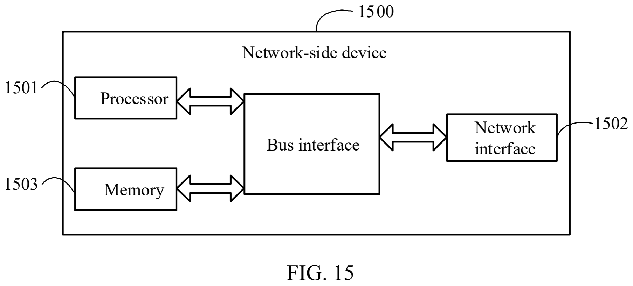

Specifically, an embodiment of this application further provides a network-side device. As shown in FIG. 15, the network-side device 1500 includes: a processor 1501, a network interface 1502, and a memory 1503. The network interface 1502 is, for example, a common public radio interface (common public radio interface, CPRI).

Specifically, the network-side device 1500 of this embodiment of this application further includes instructions or programs stored in the memory 1503 and executable on the processor 1501, where the processor 1501 calls the instructions or programs in the memory 1503 to execute the method on the first device side, the method on the second device side, or the method on the third device side, with the same technical effects achieved, which is not further elaborated herein to avoid repetition.

An embodiment of this application further provides a readable storage medium, where the readable storage medium stores a program or instructions, and the program or instructions, when executed by a processor, implement the processes of the information transmission method embodiment executed by the first device described above, implement the processes of the information transmission method embodiment executed by the second device described above, or implement the processes of the information transmission method embodiment executed by the third device described above, with the same technical effects achieved, which is not further elaborated herein to avoid repetition.

The processor is the processor in the terminal described in the above embodiments. The readable storage medium includes a computer-readable storage medium, such as computer read-only memory ROM, random access memory RAM, magnetic disk, or optical disk.

An embodiment of this application further provides a chip. The chip includes a processor and a communication interface, where the communication interface is coupled to the processor, and the processor is configured to run a program or instructions to implement the processes of the information transmission method embodiment executed by the first device described above, implement the processes of the information transmission method embodiment executed by the second device described above, or implement the processes of the information transmission method embodiment executed by the third device described above, with the same technical effects achieved, which is not further elaborated herein to avoid repetition.

It should be understood that the chip mentioned in this embodiment of this application can also be referred to as a system on chip, a system chip, a chip system, or a system-level chip.

An embodiment of this application further provides a computer program/program product, where the computer program/program product is stored in a storage medium, and the computer program/program product is executed by at least one processor to implement the processes of the information transmission method embodiment executed by the first device described above, implement the processes of the information transmission method embodiment executed by the second device described above, or implement the processes of the information transmission method embodiment executed by the third device described above, with the same technical effects achieved, which is not further elaborated herein to avoid repetition.

An embodiment of this application further provides an information transmission system, including: a first device, a second device, and a third device, where the first device is able to execute the steps of the information transmission method executed by the first device, the second device is able to execute the steps of the information transmission method executed by the second device, and the third device is able to execute the steps of the information transmission method executed by the third device.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. An information transmission method, comprising:

   sending, by a first device, first information corresponding to first accuracy information of a first model to a second device or a third device, wherein the first information is used to describe information used to obtain the first accuracy information; and
   the second device is a device that triggers the first device to execute the first model, and the third device is a device that generates the first model.

2. The method according to claim 1, wherein the first information comprises at least one of the following:

   the number of data used;
   the number of inferences performed;
   a sampling time of the data used;
   a sampling area of the data used;
   a variance of the data used; and
   a mean of the data used.

3. The method according to claim 1 or 2, wherein the sending, by a first device, first information corresponding to first accuracy information of a first model to a second device or a third device comprises:

   sending, by the first device, the first information to the second device or the third device in a case that the data used by the first device to obtain the first accuracy information of the first model satisfies second information, wherein the second information is used to describe requirements for the data used; or
   sending, by the first device, the first information to the second device or the third device in a case that the number of inferences performed by the first device to obtain the first accuracy information of the first model satisfies second information, wherein the second information is used to describe requirements for the number of inferences performed.

4. The method according to any one of claims 1 to 3, wherein the method further comprises:

   sending, by the first device, inference results obtained using the first model to the second device or the third device in a case that the data used by the first model to perform inference satisfies third information, wherein the third information is used to describe requirements for the data used; or

sending, by the first device, inference results obtained using the first model to the second device or the third device in a case that the number of inferences performed by the first model satisfies third information, wherein the third information is used to describe requirements for the number of inferences performed.

**5.** The method according to claim 3 or 4, wherein the method further comprises:

receiving, by the first device, second information or third information sent by the second device; or
receiving, by the first device, second information or third information sent by the third device.

**6.** The method according to claim 5, wherein the receiving, by the first device, second information or third information sent by the second device comprises:

receiving, by the first device, a first request sent by the second device; wherein
the first request carries the second information or the third information, and the first request is used to trigger the first device to perform inference using the first model.

**7.** The method according to claim 5, wherein the receiving, by the first device, second information or third information sent by the third device comprises:

receiving, by the first device, model-related information sent by the third device, wherein the model-related information comprises the second information or the third information; or
receiving, by the first device, a second request sent by the third device, wherein the second request carries the second information or the third information, and the second request is used to request the first device to monitor accuracy of the first model.

**8.** The method according to any one of claims 1 to 7, wherein the method further comprises:

sending, by the first device, fourth information to a fourth device, wherein the fourth information is used to describe requirements for training data used to train the first model or requirements for the number of trainings performed to train the first model; or
sending, by the first device, fifth information to the fourth device, wherein the fifth information is used to describe information about data usable for performing inference using the first model or information about the number of inferences executable for performing inference using the first model.

**9.** The method according to any one of claims 1 to 8, wherein the first accuracy information of the first model is **characterized by** at least one of the following:

a ratio of the number of correct predictions by the first model to the total number of predictions by the first model;
a root mean square error of the first model;
a recall rate of the first model; and
an F1 score of the first model.

**10.** The method according to any one of claims 1 to 9, wherein the second information, third information, or fourth information corresponding to the first model comprises at least one of the following:

a threshold for the number of data used;
a threshold for the number of inferences performed;
restriction information on a sampling time period of the data used;
restriction information on a sampling area of the data used;
a threshold for a variance of the data used; and
a threshold for a mean of the data used.

**11.** The method according to claim 8, wherein the fifth information comprises at least one of the following:

the number of data used;
the number of inferences performed;
a sampling time period of the data used;
a sampling area of the data used;
a variance of the data used; and
a mean of the data used.

**12.** The method according to any one of claims 1 to 11, wherein the first device comprises an analytics logical network function or a network data analytics network function with an analytics logical function.

**13.** An information transmission method, comprising:

triggering, by a second device, a first device to execute a first model; and
receiving, by the second device, first information corresponding to first accuracy information of the first model sent by the first device, wherein the first information is used to describe information used to obtain the first accuracy information.

**14.** The method according to claim 13, wherein the first information comprises at least one of the following:

the number of data used;
the number of inferences performed;
a sampling time of the data used;
a sampling area of the data used;
a variance of the data used; and
a mean of the data used.

15. The method according to claim 13 or 14, wherein the receiving, by the second device, first information corresponding to first accuracy information of the first model sent by the first device comprises:

receiving, by the second device, the first information in a case that the data used by the first device to obtain the first accuracy information of the first model satisfies second information, wherein the second information is used to describe requirements for the data used; or
receiving, by the second device, the first information in a case that the number of inferences performed by the first device to obtain the first accuracy information of the first model satisfies second information, wherein the second information is used to describe requirements for the number of inferences performed.

16. The method according to any one of claims 13 to 15, wherein the method further comprises:

receiving, by the second device, inference results obtained using the first model and sent by the first device, in a case that the data used by the first model to perform inference satisfies third information, wherein the third information is used to describe requirements for the data used; or
receiving, by the second device, inference results obtained using the first model and sent by the first device, in a case that the number of inferences performed by the first model satisfies third information, wherein the third information is used to describe requirements for the number of inferences performed.

17. The method according to claim 15 or 16, wherein the method further comprises:
sending, by the second device, second information or third information to the first device.

18. The method according to claim 17, wherein the sending, by the second device, second information or third information to the first device comprises:

sending, by the second device, a first request to the first device; wherein
the first request carries the second information or the third information, and the first request is used to trigger the first device to perform inference using the first model.

19. The method according to any one of claims 13 to 18, wherein the method further comprises:
determining, by the second device based on the first information, whether to use inference results obtained by the first model.

20. The method according to any one of claims 13 to 19, wherein the method further comprises:

receiving, by the second device, the first accuracy information of the first model sent by the first device, wherein the first accuracy information corresponds to the first information; and
determining, by the second device based on the first accuracy information and the first information, whether to continue using the first device for inference.

21. The method according to any one of claims 13 to 20, wherein the method further comprises:
sending, by the second device, sixth information to a fourth device, wherein the sixth information is used to describe requirements for data usable for performing inference using the first model or requirements for the number of inferences executable for performing inference using the first model.

22. The method according to claim 21, wherein the second information, third information, or sixth information corresponding to the first model comprises at least one of the following:

a threshold for the number of data used;
a threshold for the number of inferences performed;
restriction information on a sampling time period of the data used;
restriction information on a sampling area of the data used;
a threshold for a variance of the data used; and
a threshold for a mean of the data used.

23. The method according to any one of claims 13 to 21, wherein the second device comprises a terminal device or a consumer network function.

24. An information transmission method, comprising:

sending, by a third device, a first model to a first device; and
receiving, by the third device, first information corresponding to first accuracy information of the first model sent by the first device, wherein the first information is used to describe information used to obtain the first accuracy information.

**25.** The method according to claim 24, wherein the first information comprises at least one of the following:

the number of data used;
the number of inferences performed;
a sampling time of the data used;
a sampling area of the data used;
a variance of the data used; and
a mean of the data used.

**26.** The method according to claim 24 or 25, wherein the receiving, by the third device, first information corresponding to first accuracy information of the first model sent by the first device comprises:

receiving, by the third device, the first information in a case that the data used by the first device to obtain the first accuracy information of the first model satisfies second information, wherein the second information is used to describe requirements for the data used; or
receiving, by the third device, the first information in a case that the number of inferences performed by the first device to obtain the first accuracy information of the first model satisfies second information, wherein the second information is used to describe requirements for the number of inferences performed.

**27.** The method according to any one of claims 24 to 26, wherein the method further comprises:

receiving, by the third device, inference results obtained using the first model and sent by the first device, in a case that the data used by the first model to perform inference satisfies third information, wherein the third information is used to describe requirements for the data used; or
receiving, by the third device, inference results obtained using the first model and sent by the first device, in a case that the number of inferences performed by the first model satisfies third information, wherein the third information is used to describe requirements for the number of inferences performed.

**28.** The method according to claim 26 or 27, wherein the method further comprises:
sending, by the third device, second information or third information to the first device.

**29.** The method according to claim 28, wherein the sending, by the third device, second information or third information to the first device comprises:

sending, by the third device, model-related information to the first device, wherein the model-related information comprises the second information or the third information; or
sending, by the third device, a second request to the first device, wherein the second request carries the second information or the third information, and the second request is used to request the first device to monitor accuracy of the first model.

**30.** The method according to any one of claims 24 to 29, wherein the method further comprises:
receiving, by the third device, the first accuracy information of the first model sent by the first device, wherein the first accuracy information corresponds to the first information.

**31.** The method according to any one of claims 24 to 30, wherein the method further comprises:

determining, by the third device, second accuracy information of the first model based on the first information and the first accuracy information of the first model from N devices; wherein the N devices comprise the first device and at least one fifth device, and the at least one fifth device is a device using the first model; and
N is a positive integer greater than or equal to 2.

**32.** The method according to claim 31, wherein the method further comprises:
sending, by the third device, a third request to the at least one fifth device in a case that the first information and the first accuracy information of the first model from the first device are received; wherein the third request is used to request the first information and the first accuracy information of the first model from the at least one fifth device.

**33.** The method according to claim 32, wherein the third request comprises second information, wherein the second information is used to describe requirements for the data used.

**34.** The method according to any one of claims 31 to 33, wherein the determining, by the third device, second accuracy information of the first model based on the first information and the first accuracy information of the first model from the N devices comprises:

calculating the second accuracy information Accuracy of the first model using the formula

$$Accuracy = \frac{\sum_{i=1}^{N} Num_i * Accuracy_i}{\sum_{i=1}^{N} Num_i} \quad ;$$

wherein
$Num_i$ is the number of data provided or the number of inferences performed by an i-th device among the N devices, and $Accuracy_i$ is the

first accuracy information of the first model from the i-th device among the N devices.

35. The method according to any one of claims 24 to 34, wherein the method further comprises:
sending, by the third device, seventh information to a fourth device, wherein the seventh information is used to describe information about data used to train the first model or information about the number of trainings performed to train the first model.

36. The method according to claim 35, wherein the seventh information comprises at least one of the following:

the number of data used;
the number of trainings performed;
a sampling time period of the data used;
a sampling area of the data used;
a variance of the data used; and
a mean of the data used.

37. The method according to any one of claims 31 to 34, wherein the method further comprises:
determining, by the third device based on the second accuracy information, whether to retrain the first model.

38. The method according to any one of claims 24 to 37, wherein the second information or third information corresponding to the first model comprises at least one of the following:

a threshold for the number of data used;
a threshold for the number of inferences performed;
restriction information on a sampling time period of the data used;
restriction information on a sampling area of the data used;
a threshold for a variance of the data used; and
a threshold for a mean of the data used.

39. The method according to any one of claims 24 to 38, wherein the third device comprises a model training logical network function or a network data analytics network function with a model training logical function.

40. An information transmission apparatus, comprising:

a first sending module, configured to send first information corresponding to first accuracy information of a first model to a second device or a third device, wherein the first information is used to describe information used to obtain the first accuracy information; wherein
the second device is a device that triggers a first device to execute the first model, and the third device is a device that generates the first model.

41. An information transmission apparatus, comprising:

a first processing module, configured to trigger a first device to execute a first model; and
a first receiving module, configured to receive first information corresponding to first accuracy information of the first model sent by the first device, wherein the first information is used to describe information used to obtain the first accuracy information.

42. An information transmission apparatus, comprising:

a second sending module, configured to send a first model to a first device; and
a second receiving module, configured to receive first information corresponding to first accuracy information of the first model sent by the first device, wherein the first information is used to describe information used to obtain the first accuracy information.

43. A communication device, comprising a processor and a memory, wherein the memory stores a program or instructions executable on the processor, and the program or instructions, when executed by the processor, implement the steps of the information transmission method according to any one of claims 1 to 12, or implement the steps of the information transmission method according to any one of claims 13 to 23, or implement the steps of the information transmission method according to any one of claims 24 to 39.

44. A readable storage medium, wherein the readable storage medium stores a program or instructions, and the program or instructions, when executed by a processor, implement the steps of the information transmission method according to any one of claims 1 to 12, or implement the steps of the information transmission method according to any one of claims 13 to 23, or implement the steps of the information transmission method according to any one of claims 24 to 39.

FIG. 1

FIG. 2

Start

A first device sends first information corresponding to first accuracy information of a first model to a second device or a third device, where the first information is used to describe information used to obtain the first accuracy information; and the second device is a device that triggers the first device to execute the first model, and the third device is a device that generates the first model

301

End

FIG. 3

FIG. 4

| MTLF | AnLF-1 | AnLF-2 | AnLF-3 |
|------|--------|--------|--------|

1. Second request

2. Notify (first accuracy information, first information)

3. Third request

4. Notify (first accuracy information, first information)

5. Determine whether to retrain

FIG. 5

| MTLF | NRF | AnLF |
|------|-----|------|

1. Registration request

2. Response message

3. Discovery request

4. Response message

FIG. 6

FIG. 7

FIG. 8

Start

A third device sends a first model to a first device — 901

The third device receives first information corresponding to first accuracy information of the first model sent by the first device, where the first information is used to describe information used to obtain the first accuracy information — 902

End

FIG. 9

Information transmission apparatus — 1000

Frist sending module — 1010

FIG. 10

Information transmission apparatus — 1100

First processing module — 1110

First receiving module — 1120

FIG. 11

Information transmission apparatus — 1200

Second sending module — 1210

Second receiving module — 1220

FIG. 12

1300

Communication device

1301

Processor

1302

Memory

FIG. 13

1400

Terminal

1401 Radio frequency unit

1402 Network module

1410 Processor

Memory

1409 Application program

Operating system

1403 Audio output unit

1404 Input unit

14041 Graphics processing unit

14042 Microphone

1408 Interface unit

1407 User input unit

14071 Touch panel

14072 Other input devices

1406 Display unit

14061 Display panel

1405 Sensor

FIG. 14

FIG. 15

## INTERNATIONAL SEARCH REPORT

| International application No. |
|---|
| **PCT/CN2024/071238** |

| A. | CLASSIFICATION OF SUBJECT MATTER |
|---|---|

H04W 4/20(2018.01)i

According to International Patent Classification (IPC) or to both national classification and IPC

| B. | FIELDS SEARCHED |
|---|---|

Minimum documentation searched (classification system followed by classification symbols)

IPC:H04L, H04W, H04Q

Documentation searched other than minimum documentation to the extent that such documents are included in the fields searched

Electronic data base consulted during the international search (name of data base and, where practicable, search terms used)

CNTXT, WPABS, WPABSC, ENTXTC, VEN, VCN, CNKI, 3GPP, IEEE: 模型 准确 触发 model accurate trigger AiU NWDAF MTLF AnLF consumer NF

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 111629319 A (RESEARCH INSTITUTE OF CHINA MOBILE COMMUNICATIONS CORP. et al.) 04 September 2020 (2020-09-04) description, paragraphs [0072]-[0144] | 1-44 |
| X | WO 2021155579 A1 (HUAWEI TECHNOLOGIES CO., LTD.) 12 August 2021 (2021-08-12) description, page 11, line 7-page 28, line 37 | 1-44 |
| A | CN 106951925 A (CHENGDU XIAODUO TECHNOLOGY CO., LTD.) 14 July 2017 (2017-07-14) entire document | 1-44 |
| A | CN 114916007 A (DATANG MOBILE COMMUNICATIONS EQUIPMENT CO., LTD.) 16 August 2022 (2022-08-16) entire document | 1-44 |
| A | WO 2022061784 A1 (HUAWEI TECHNOLOGIES CO., LTD.) 31 March 2022 (2022-03-31) entire document | 1-44 |
| A | US 2021097395 A1 (SAP SE) 01 April 2021 (2021-04-01) entire document | 1-44 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **22 March 2024** | **27 March 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/071238**

| Patent document cited in search report | | | Publication date (day/month/year) | Patent family member(s) | | | Publication date (day/month/year) |
|---|---|---|---|---|---|---|---|
| CN | 111629319 | A | 04 September 2020 | None | | | |
| WO | 2021155579 | A1 | 12 August 2021 | US | 2022368617 | A1 | 17 November 2022 |
| | | | | EP | 4087193 | A1 | 09 November 2022 |
| | | | | EP | 4087193 | A4 | 18 January 2023 |
| | | | | CN | 115004653 | A | 02 September 2022 |
| CN | 106951925 | A | 14 July 2017 | None | | | |
| CN | 114916007 | A | 16 August 2022 | WO | 2022171154 | A1 | 18 August 2022 |
| | | | | EP | 4293976 | A1 | 20 December 2023 |
| WO | 2022061784 | A1 | 31 March 2022 | US | 2023224752 | A1 | 13 July 2023 |
| | | | | WO | 2022062362 | A1 | 31 March 2022 |
| | | | | CA | 3193840 | A1 | 31 March 2022 |
| | | | | EP | 4207860 | A1 | 05 July 2023 |
| | | | | EP | 4207860 | A4 | 28 February 2024 |
| | | | | AU | 2021347699 | A1 | 18 May 2023 |
| US | 2021097395 | A1 | 01 April 2021 | US | 11562245 | B2 | 24 January 2023 |

Form PCT/ISA/210 (patent family annex) (July 2022)

39

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310087252

- CN 202310102348